Europäisches Patentamt

(19) European Patent Office

Office européen des brevets

(11) Numéro de publication: **0 093 031**

A1

## (12) DEMANDE DE BREVET EUROPEEN

(21) Numéro de dépôt: **83400702.3**

(22) Date de dépôt: **06.04.83**

(51) Int. Cl.³: **H 01 B 9/02**
**H 01 B 7/28**

(30) Priorité: **06.04.82 FR 8205972**

(43) Date de publication de la demande:
**02.11.83 Bulletin 83/44**

(84) Etats contractants désignés:
**AT BE CH DE GB IT LI NL SE**

(71) Demandeur: **THOMSON JEUMONT CABLES**
**5, rue du Président Krüger**
**F-92000 Courbevoie(FR)**

(72) Inventeur: **Bardoux, Valentin**
**THOMSON-CSF SCPI 173, bld Haussmann**
**F-75379 Paris Cedex 08(FR)**

(74) Mandataire: **Phan, Chi Quy et al,**
**THOMSON-CSF SCPI 173, Bld Haussmann**
**F-75379 Paris Cedex 08(FR)**

(54) Câble électrique à conducteurs en aluminium.

(57) Câble électrique (1) comprenant un assemblage de conducteurs (2, 3, 4, 5) réalisés en aluminium, séparés les uns des autres par une matière d'étanchéité (9) dans lesquels le conducteur neutre (5) est nu et les conducteurs de phases (2, 3, 4) sont individuellement entourés d'un fourreau ajusté (8) réalisé en matière électriquement isolante, une enveloppe métallique (6) servant d'écran constituée par un ruban d'aluminium enroulé autour de cet assemblage de conducteurs et une gaine de protection extérieure (7) en polyéthylène réticulé.

EP 0 093 031 A1

1

## CABLE ELECTRIQUE A CONDUCTEURS EN ALUMINIUM

La présente invention concerne un câble électrique à conducteurs en aluminium.

Un câble électrique connu tel que celui qui assure la distribution de l'électricité est habituellement constitué par un assemblage de conducteurs neutre et de phase isolés, entouré d'une enveloppe métallique servant d'écran, et d'une gaine de protection extérieure.

Dans un tel câble électrique, les conducteurs de phase et neutre étant en général réalisés en cuivre, le problème de leur protection contre la corrosion ne se pose pratiquement pas. Cependant certains câbles électriques connus ont des conducteurs en aluminium qui sont vulnérables à la corrosion. Jusqu'à présent leur protection consiste à les envelopper individuellement dans une gaine étanche, laquelle empêche la progression de la corrosion. La réalisation d'une gaine étanche s'avère cependant onéreuse bien que cette gaine étanche constitue en même temps une enveloppe électriquement isolante permettant un assemblage des conducteurs de phase, le conducteur neutre étant muni d'une onéreuse gaine étanche en plomb qui le protège.

La présente invention ayant pour but d'éviter ces inconvénients, permet de réaliser un câble électrique économique à conducteurs de phase et neutre, efficacement protégés contre la propagation de la corrosion.

Selon l'invention, un câble électrique à conducteurs électriquement isolés les uns des autres, et un neutre nu formant un assemblage sous un écran métallique entouré d'une gaine de protection extérieure, comprend des conducteurs en aluminium séparés les uns des autres par une matière d'étanchéité.

Pour mieux faire comprendre l'invention on en décrit ci-après un exemple de réalisation, illustré par un dessin ci-annexé qui donne une vue en coupe transversale d'un câble électrique dont les éléments composants sont représentés à des échelles différentes, non proportionnelles pour mieux montrer les détails de leurs structures.

Le câble électrique 1 représenté comprend trois conducteurs de phases 2, 3, 4, un conducteur neutre 5, une enveloppe métallique 6 servant d'écran, et une gaine de protection extérieure 7. L'enveloppe métallique 6 et la gaine de protection extérieure 7 peuvent être choisies parmi celles de types connus. L'enveloppe métallique 6 peut être réalisée avec des rubans d'aluminium et la gaine de protection extérieure 7 peut être constitué avec du polychlorure de vinyle.

Dans le câble 1 les conducteurs de phases 2, 3, 4 et le conducteur neutre 5 sont réalisés en aluminium, et de préférence suivant une structure massive.

Selon une caractéristique de l'invention, les conducteurs de phases 2, 3, 4 sont électriquement isolés individuellement par un fourreau ajusté en matière électriquement isolante 8 garantissant leur bon fonctionnement électrique mais n'assurant pas nécessairement une étanchéité totale à l'humidité, et séparés les uns des autres et du conducteur neutre 5 nu par une matière d'étanchéité 9 d'un type connu tel qu'une poudre gonflable à l'humidité. Les fourreaux isolants 8 des conducteurs de phases constitués en un matériau isolant électrique de type également connu.

Quand dans un câble 1, une détérioration locale de la gaine de protection extérieure 7 s'est produite, l'humidité tend à s'y infiltrer, à se propager le long des conducteurs et provoquer sur son chemin la corrosion de l'écran et du neutre nu et détériorer les caractéristiques électriques du fourreau 8. La matière d'étanchéité 9 qui s'y trouve s'oppose instantanément à la progression de cette humidité et permet, de ce fait, de limiter les dommages en empêchant la propagation de la corrosion.

Dans un câble électrique connu, à la suite d'un vieillissement inévitable de la matière plastique ou synthétique constituant la gaine étanche des conducteurs, et de la fatigue mécanique de celle-ci résultant d'une répétition des dilatations et des contractions provoquées par l'échauffement et le refroidissement des conducteurs durant leur fonctionnement et leur repos, la gaine étanche ne remplit plus correctement ses fonctions. Progressivement l'étanchéité des conducteurs n'est plus assurée et la protection contre la propagation de la corrosion devient inexistante.

Par contre dans le câble électrique 1 réalisé selon l'invention, la couche de matière d'étanchéité 9 est toujours présente le long du câble et prête à empêcher la propagation de la corrosion des conducteurs quel que soit l'état de vieillissement et de la fatigue mécanique des fourreaux isolants 8.

Dans une première variante de réalisation du câble 1, l'enveloppe métallique 6 de ce câble est constituée par un ruban d'aluminium enroulé en hélice ou en long autour de l'assemblage formé de conducteurs de phases 2, 3, 4 et neutre 5 de manière à obtenir un bon contact avec les conducteurs de phases 2, 3, 4 et un contact intime de conduction électrique avec le conducteur neutre 5. Le ruban d'aluminium constituant l'enveloppe métallique 6 peut être collé à la surface interne de la gaine de protection extérieure 7.

Dans les câbles connus, l'enveloppe métallique constituée en rubans d'acier galvanisé a, en dehors de son poids qui est relativement plus important que celui d'une enveloppe en rubans d'aluminium, un prix de revient supérieur à celui de cette dernière enveloppe.

En outre un câble électrique 1, muni d'une enveloppe 6 constituée en rubans d'aluminium et des conducteurs de phases 2, 3, 4 et neutre 5 réalisés également en aluminium dont la déformation mécanique est relativement aisée, présente une grande facilité de manipulation lors de son utilisation, et une bonne aptitude aux travaux de dérivations effectués sous tension.

Dans une deuxième variante de réalisation du câble électrique 1, une couche de matière d'étanchéité non représentée est insérée dans l'espace entre son enveloppe métallique 6 et des conducteurs de phases 2, 3, 4 pour renforcer la protection de ces conducteurs contre

4

la progression de l'humidité et par conséquent la propagation de la corrosion.

Dans une troisième variante de réalisation du câble électrique 1, la gaine de protection extérieure 7 est réalisée en polyéthylène, de préférence du polyéthylène réticulé. Cette gaine en polyéthylène assure en effet au câble 1 une meilleure imperméabilité que celle d'une gaine en matériau habituel tel que du polychlorure de vinyle.

Dans une quatrième variante de réalisation du câble électrique 1, son conducteur neutre 5 est constitué par un assemblage de fils élémentaires en aluminium. Dans le câble électrique, les fils élémentaires constituant le conducteur neutre 5 sont séparés les uns des autres par une couche de matière d'étanchéité. Cette structure divisée du conducteur neutre 5 permet de réduire dans ce conducteur, d'une manière appréciable, la vitesse de corrosion, au droit d'une détérioration de la gaine de protection extérieure 7 par exemple.

Dans le câble électrique 1 représenté, les conducteurs de phases 2, 3, 4 et neutre 5 ont une section transversale sensiblement en forme de secteur circulaire.

Selon l'invention, ces conducteurs peuvent avoir une section transversale présentant une toute autre forme telle qu'une forme circulaire ou polygonale.

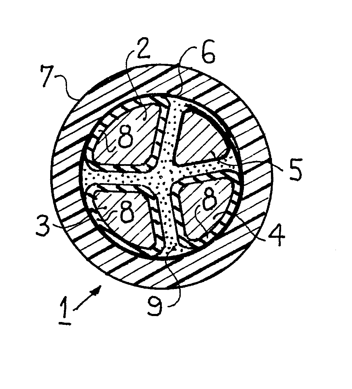

REVENDICATIONS

1. Câble électrique à conducteurs de phases et conducteur neutre en aluminium formant un assemblage entouré d'une gaine extérieure (7), caractérisé en ce qu'il comprend des conducteurs de phases (2, 3, 4) munis individuellement d'un fourreau à étanchéité facultative, en matière électriquement isolante (8), un conducteur neutre nu (5), et une matière d'étanchéité (9) séparant ces conducteurs entre eux, protégeant contre la corrosion à la fois les conducteurs de phases et ce conducteur neutre en empêchant la propagation de l'humidité sur leur longueur.

2. Câble selon la revendication 1, caractérisé en ce que le conducteur neutre (5) est constitué d'un assemblage de fils élémentaires séparés les uns des autres par une couche de matière d'étanchéité, empêchant la propagation de l'humidité sur leur longueur.

3. Câble selon l'une des revendications 1 et 2, ayant une enveloppe métallique (6) servant d'écran disposé autour de l'assemblage formé par les conducteurs, caractérisé en ce qu'il comprend une enveloppe métallique (6) disposée en contact intime de conduction électrique avec le conducteur neutre (5) et une couche de matière d'étanchéité (9) séparant les conducteurs de phases (2, 3, 4) entre eux et ce conducteur neutre (5) et empêchant la propagation de l'humidité sur leur longueur.

4. Câble selon l'une des revendications 1 à 3, caractérisé en ce que la gaine de protection extérieure (7) est réalisée en polyéthylène réticulé.

Office européen
des brevets

**RAPPORT DE RECHERCHE EUROPEENNE**

**0093031**
Numéro de la demande

EP  83 40 0702

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-1 452 799 (COMP. GEN. DE FABRICATION DE CABLES ELECTRIQUES)<br>* Page 2, colonne 1, ligne 32 - page 3, colonne 2, ligne 21; figure unique * | 1-3 | H 01 B  9/02<br>H 01 B  7/28 |
| | --- | | |
| Y | GB-A- 744 279 (B.I.C.C.)<br>* Page 2, lignes 1-29; figure unique * | 1 | |
| | --- | | |
| A | DE-A-1 923 557 (KABELWERK RHEYDT)<br>* Page 3, alinéa 2 - page 4, dernier alinéa; figures 1-3 * | 1,3 | |
| | --- | | |
| A | FR-A-2 108 141 (TREFIMETAUX)<br>* Page 2, ligne 2 - page 3, ligne 8; figure unique * | 1-3 | **DOMAINES TECHNIQUES RECHERCHES (Int. Cl. ³)** |
| | ----- | | H 01 B |

Le présent rapport de recherche a été établi pour toutes les revendications

| Lieu de la recherche | Date d'achèvement de la recherche | Examinateur |
|---|---|---|
| LA HAYE | 14-07-1983 | DEMOLDER J. |